# EUROPEAN PATENT SPECIFICATION

(11) **EP 2 958 291 B1**
(45) Date of publication and mention of the grant of the patent: **14.04.2021**
(21) Application number: 14173002.8
(22) Date of filing: 18.06.2014
(51) Int. Cl.: H04L 29/06, H04L 12/24

(54) **Method and system for authenticating network equipment**
Verfahren und System zur Authentifizierung von Netzwerkvorrichtungen
Procédé et système d'authentification d'équipement de réseau

(43) Date of publication of application: 23.12.2015
(73) Proprietor: Swisscom AG, 3050 Bern (CH)
(72) Inventor: Schatzmann, Dominik, 3047 Bremgarten (CH); Brunner, Markus, 6120 Sursee (CH)
(74) Representative: Veni Swiss & European Patent Attorneys

(56) References cited:
- US-A1- 2006 185 001
- US-B1- 7 024 548

## Description

### TECHNICAL FIELD OF THE INVENTION

The present invention relates to the field of managed networking, and in particular to systems and techniques for onboarding new network equipment.

### BACKGROUND OF THE INVENTION

Today's network architectures are preferably dynamically manageable, configurable and adaptable in order to support the high-bandwidth, dynamic nature of cloud-based and software-as-a-service (SaaS) applications. The trend towards software-defined networking (SDN), for example, allows network control functions to be decoupled from packet-forwarding functions, thereby enabling the network itself to be programmable, and allowing the underlying infrastructure to be abstracted for applications and network services. Network-wide traffic-flow can thus be administered and managed dynamically in order to respond to rapidly-evolving network requirements. In such agile and configurable network environments, network equipment may be required to provide any significant level of autonomous network management functionality such as would have been found in earlier networking arrangements, in which, for example, a switch might commonly comprise its own layer 2 or layer 3 functionality.

In prior art systems, the network equipment and the network management system typically run in the same network. In the case of a secured management network, the security of the devices may rely on being part of this network. Other possible security arrangements may require adding a digital security key, hardware tokens such as trusted platform modules (TPMs), or credentials for creating an authenticated channel to the management system. In fully-managed networks, network security may rely on having complete knowledge and/or control of each physical device and its connection(s). When new network equipment is to be onboarded into such prior art systems, it is assumed that the management system should seek out and authenticate the network equipment. The term onboarding is widely used in the field of managed networking, and is used to refer to actions or procedures by which network equipment is registered with a managed network, and/or by which the network management system is configured to accommodate the new network equipment in the managed network.

If a network management system is owned by a single entity, as it typically is in prior art systems, then the question of ownership or control of the various network equipment entities is not pertinent, and a decision as to which entity a device belongs to is not normally required.

US patent US8443187B1 describes a method of authenticating a network supplicant's equipment using a particular port ID or MAC address of the device as authentication information in order to authenticate the device to an authentication server. However, this relatively naïve solution requires foreknowledge of the port ID and MAC address of the equipment, and is in any case open to abuse by emulation or faking of these device parameters.

According to US patent application US20060185001A1, an authentication device may supply an authentication protocol which is used to configure a network device such that, once configured with the authentication protocol, the network device is then able to use the authentication protocol to authenticate itself. The configuration of the network device changes the network device so that authentication can take place.

Prior art onboarding arrangements are typically unsuitable for use over unsecured or public networks such as the Internet, or they may require the network equipment to be authenticated by a user connecting a laptop or PC to the network equipment, logging into the device with security parameters or software in the device. Alternatively, a hardware enrolment process may be needed, for example using an additional SIM card in the network equipment for authenticating the device. Prior art systems and method may also oblige the network manager to provide network equipment hardware which is preconfigured for the particular network environment, thereby restricting the number of potential users to those who are willing or able to use such a preconfigured network equipment.

In general, therefore, prior art onboarding arrangements require dedicated hardware, firmware or software, and may involve complex, inflexible systems for coordinating network management tasks and for communicating authentication information around the network in order for them to function effectively.

### BRIEF DESCRIPTION OF THE INVENTION

An aim of the present invention is to overcome at least some of the disadvantages of prior art methods and systems. To this end, the invention foresees an authentication method as set out in claim 1, an authentication controller as set out in claim 4 and a system as set out in claim 5. Further variants of the invention are set out in the dependent claims 2, 3 and 6 to 15.

By issuing a challenge, specifying a network configuration change to be made to the network equipment, and then detecting whether the network equipment has been configured as specified in the challenge, the onboarding process can be carried out without any special authentication hardware or software, and without any pre-configuration of the network equipment which is being onboarded. The network equipment may thus be any standard device; no special pre-provisioning is required, nor is any special authentication equipment required, such as a connected laptop.

Apart from the advantages mentioned above, the arrangements described here may have a further advantage, namely that the authentication process may be made invisible to other devices on the network. The challenge/configuration of the network device may conceivably be detectable by a snooping device (if it knows where to look), however the significance of the network configuration of the network equipment (particularly if it includes a timed sequence of configuration steps) would be meaningless to any device except the authentication controller.

In the context of this description, references to devices should not be taken as an indication of any particular kind of physical structure. A device or network element (or network equipment) may comprise discrete but interconnected modules, for example, or may be implemented partially or entirely as software or firmware running on a computer or dedicated electronic device, or embedded on a data carrier or integrated circuit. Similarly, references to connections should not be taken as implying any particular kind of physical connections. Unless otherwise specified, a connection may be understood to comprise any wired, optical, wireless or other known means of transferring information between communicating devices.

### DETAILED DESCRIPTION OF THE INVENTION

The invention will now be described in more detail with reference to the attached drawings, in which:
Figure 1 shows a schematic representation of an example of a first network context in which the present invention may advantageously be used.
Figure 2 shows in schematic view an example of a second network context in which the present invention may advantageously be used.
Figure 3 illustrates an example of an implementation of a method according to the present invention.

The drawings are provided for illustrative purposes only, as an aid to understanding certain principles underlying the invention. They should not be taken as limiting the scope of protection sought. Where the same reference numerals have been used in different figures, these are intended to refer to the same or corresponding features. However, the use of different reference numerals does not necessarily indicate the existence of a difference between the features to which the numerals refer.

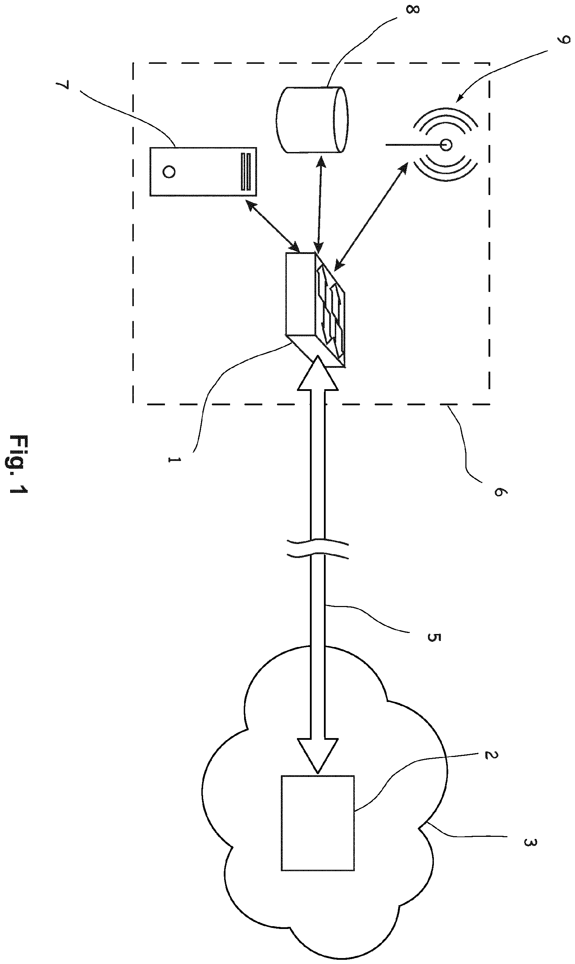

Figure 1 shows, in greatly simplified form, a schematic representation of a network management arrangement, such as a software-defined network (SDN) in which a network 6, for example a local area network in a company's offices, is managed by a remote network management system 2 running on one or more servers at a remote location 3. Such a hosted network management service is sometimes known as LAN Management as a Service, or LANaaS, and may for example be provided via the internet, or other communications network. In such a remotely-managed SDN system, network intelligence of multiple managed networks 6 may be centralized in one or more software-based SDN controllers 2 which maintain a global view of each managed network 6, and which may be configured so that the managed networks 6 each appear to applications and policy engines as a single logical entity.

When a new network or sub-network 6 is to be onboarded into the LANaaS system 2, a management service connection 5 is established between the network equipment 1 (eg a switch) of the network 6 and the LANaaS system 2. The network equipment 1 may serve to control network traffic to and from multiple local devices 7, 8 and 9, for example, with a functionality which is controlled by the remote cloud-based Network Management System (LANaaS) 2.

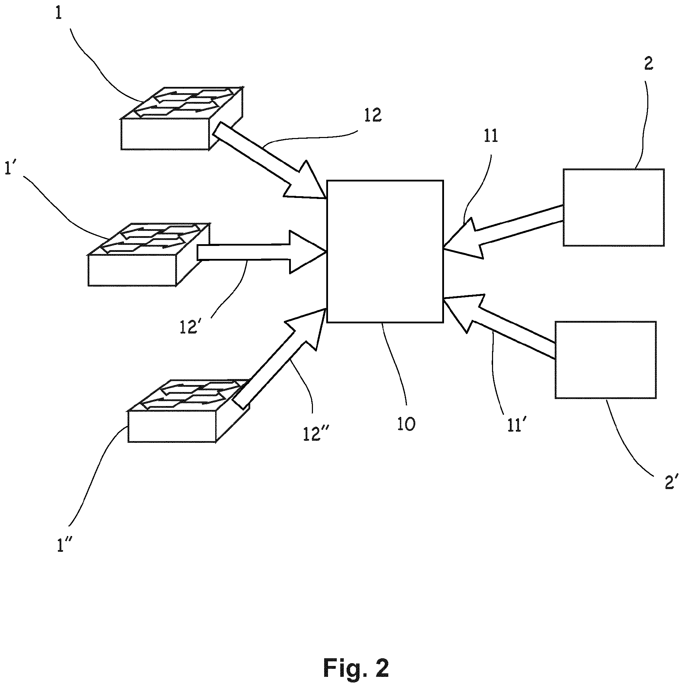

Such network-management services may for example be made available by an internet service provider (ISP) to a customer who has networks 6 and/or network equipment 1 at multiple locations, and wishes to network them together as though they were all on the same local area network (LAN), instead of resorting to multiple virtual private network (VPN) connections to a common server. Such an arrangement is indicated schematically in figure 2. A service provider may offer such network management services to multiple customers, each of which may have one or more network equipment elements 1 which are to be connected to their managed network service 2.

Since the LANaaS system 2 may be at a remote location 3, it may not be able to verify directly the identity or the location of the network equipment 1 which is being onboarded. The process of registering the network equipment 1 to the LANaaS system 2 therefore presents a security risk. For example, instead of onboarding a network equipment 1, an ill-intentioned intruder may attempt to disguise an unauthorised network equipment as the expected network equipment 1, and thereby gain unauthorised access to parts of the managed network 6. Similarly, a well-intentioned user should be prevented from onboarding his network equipment 1, 1', 1" to the wrong network management system 2, 2'. It is thus important that each new network equipment which is added to a particular LANaaS system 2, 2' be authorised to access that service.

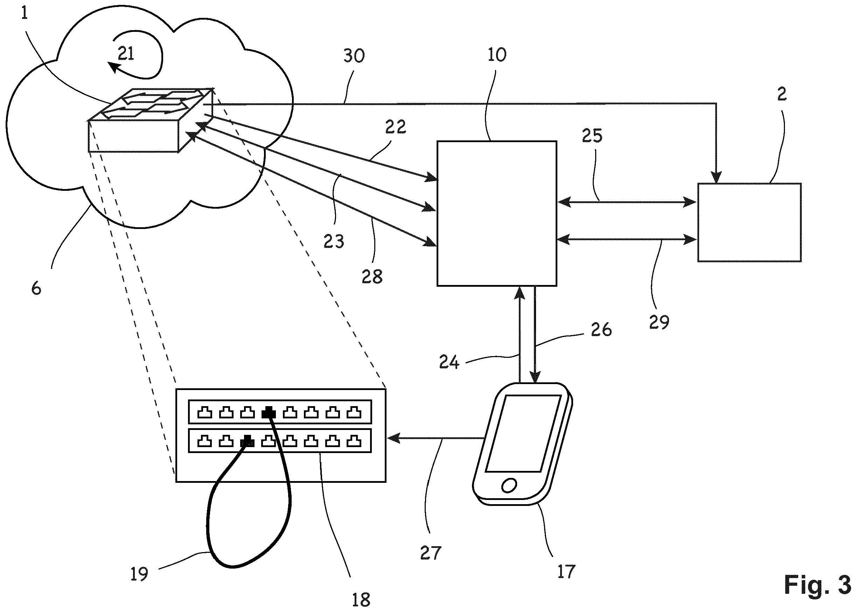

Figures 2 and 3 illustrate how an onboarding process according to the invention can be carried out using a dedicated authentication controller device to ensure that new network equipment is authenticated and onboarded correctly.

Figure 2 illustrates a situation in which one or more network equipment elements 1, 1', 1" issue registration requests 12, 12', 12", and network management services 2 and 2' issue onboarding invitations 11, 11'. An authentication controller, 10, is provided for authenticating the requests 12, 12', 12" to the appropriate network management service 2 or 2'. The authentication controller 10, also referred to in this description as a First Contact SDN Controller (FC-SDN-C) is provided to authenticate network equipment 1, 1', 1" to the LANaaS system 2, 2' to which it is to be onboarded.

The different network management controllers 2, 2' may belong to the same provider (or they may serve multiple providers), and they may each be configured to serve multiple customers. During the onboarding process of a new network equipment 1, 1' or 1", therefore, the FC-DSN-C 10 must ensure that network equipment 1 of a particular LANaaS customer is onboarded to the correct LANaaS system 2 for that customer's LANaaS network.

Network equipment 1 is authenticated to the particular user or administrative entity by a challenge-response method to securely identify which network equipment should be assigned to which LANaaS customer, and/or to verify that the network equipment 1 being onboarded is indeed the network equipment it purports to be. Authentication is based on a configuration "code" which should be manually implemented on the network equipment 1 (for example by a network administrator, using patch cables) and validated by the FC-SDN-C 10. Since different customers receive different authentication challenges, the FC-SDN-C can securely assign the network equipment 1 to the corresponding customer.

The manual configuration "code" may preferably comprise at least one action which is only capable of being performed by someone who is physically present at the same location as the network equipment to be onboarded.

Figure 3 illustrates an example of how new network equipment 1 (for example a switch) can be authenticated to the appropriate network management system 2. In this example, a company manages its network 6 using a LANaaS system 2 provided by a third-party provider. When the company needs to set up a new office having a new local network 6, the company's network administrator orders a new SDN-capable switch 1 and would like to connect it to the company's existing LANaaS network (for example via the internet). The network administrator may log into a web interface of the provider's LANaaS system, for example using her tablet 17, where she may select a "connect new switch" function on the LANaaS provider's web interface. In response, the LANaaS system 2 sends instructions which inform the network administrator of the configuration or connectivity settings by which the new SDN-capable switch 1 can authenticate itself to the LANaaS system 2. The instructions form part of an authentication challenge, by means of which the LANaaS 2 can verify which network equipment 1 is the one being onboarded in the "connect new switch" registration process. According to the instructions in the authentication challenge in this example, the network administrator should connect one or more patch cables 19 in a specified pattern between certain specified ports 18 of the SDN-capable switch 1, as indicated in figure 3. The reference 18 in figure 3 indicates an array of network connection sockets (referred to as ports) of the network equipment 1. The administrator connects the patch cable(s) 19 as instructed, and then returns to the web-interface of the device 17 and selects "done", whereupon the LANaaS system 2 identifies which network equipment (of all the newly-connected network equipment, potentially including some from other network management customers of the provider, and/or from other providers) has network ports 18 which are connected in the specified patching pattern, and assigns the identified network equipment 1 to the network management service account of that particular company. Once this onboarding step has been completed, the SDN-enabled switch 1, and the new local network 6, can be integrated into the SDN network managed by the LANaaS system 2 for that particular customer by that particular provider.

As will be discussed below, connecting patch cables 19 between ports 18 on the switch 1 is just one example of how network equipment 1 can be configured for authentication to the network management system 2 (see description of step 26, below).

An example of an onboarding sequence according to the invention will now be described in more detail. The numbering of the sequence steps below corresponds to the reference numbers in figure 3.
21.Network equipment 1 is connected to an existing network infrastructure (eg the internet) and attempts to find the FC-SDN-C 10 of the managed network 6 to which the network equipment 1 is connected. This may be implemented for example by:
   - FC-SDN-C 10 queries the network using a dedicated protocol,
   - FC-SDN-C 10 contact information is comprised in the DHCP response of a DHCP server on the network,
   - FC-SDN-C 10 refers to a pre-defined logical contact identifier such as DNS name, IP addresses, MAC address etc, and/or
   - FC-SDN-C 10 is provided as a global entity on the network, as with DNS, and can be discovered by the LANaaS management system 2.
22.The network equipment 1 attempts to open a connection with the logical contact information of FC-SDN-C 10. If necessary, the connection information may be modified, forwarded or routed by the network to the physical address of the FC-SDN-C 10 which is responsible for onboarding the particular network equipment 1, for example by:
   - Data-rewriting, such as application-dependent Network Address Translation,
   - Using a globally well-known, dedicated IP address for routing to the local FC-SDN-C,
   - Port-based routing (for example using a protocol which uses a well-known port), and/or
   - Tunneling.
23.The FC-SDN-C 10 receives the connection request of the network equipment 1 and receives meta data of the network equipment 1. Such meta data may comprise one or more parameters of the network equipment 1 such as, for example:
   - Manufacturer/vendor of the network equipment 1
   - Functional capabilities of the network equipment 1
   - Network address(es) of the network equipment 1
   - Network address(es) of other devices 7, 8, 9 connected to the network equipment 1
   - Geographic location of the network equipment 1 (eg GPS, Geolocation information)
   - Datapath connectivity characteristics of the network equipment 1
   - Uptime of the network equipment 1
24.The network administrator contacts the the FC-SDN-C 10 and informs it that she has network equipment 1 to be onboarded into her tenant network 6. She may do this through a web interface on a portable device 17, for example.
   The FC-SDN-C 10 may use meta information provided by the administrator (for example: what other network equipment should be reachable, network address of the network equipment 1, available bandwidth to the network equipment 1, number of ports of the network equipment 1, identity of the network operator/provider, geolocation etc) to reduce the number of potential candidate network equipment devices 1, 1', 1". The LANaaS system 2 may query the FC-SDN-C for details of candidate network equipment devices 1) and/or to ensure that it is the correct network equipment 1 which is being onboarded.
   It would in principle be possible at this stage for the administrator simply to accept the network equipment 1 based on the information which the LAN management system 2 received from the switch 1 (eg the IP address of the network equipment 1), and then to proceed with step 29. However, since such address information can be faked by attackers, a challenge-response authentication procedure is performed in the following steps 25 to 28.
25.The LANaaS system 2 requests an authentication challenge from the FC-SDN-C 10, optionally including some meta data with the request, and sends the received authentication challenge over a secure channel to the administrator (for example via a web interface, or a mobile phone service such as SMS).
26.The administrator receives instructions or configuration information comprised in the authentication challenge from the FC-SDN-C 10. She may for example receive this information via a web-page on a tablet or other device 17. Such an authentication challenge may comprise, for example:
   - One or more pairs of ports of the network equipment which should be patched together;
   - One or more connection ports 18 of the network equipment 1 which should be patched to another, independently verifiable network device. Advantageously, this other network device may already be registered to the LANaaS system 2;
   - One or more connection ports 18 which should be connected to the internet;
   - Sequence information for performing the identifying action(s), eg first patch Port A to Port X, then Port B to Port Y... ; and/or
   - Time constraint information for performing the identifying action(s), eg patch Port A to Port X in a time-window which begins after thirty seconds and finishes after forty seconds.
27.The network administrator makes the manual configuration changes to the network equipment 1 according to the instructions and/or configuration information in the authentication challenge. For example, she may connect a patch cable 19 between two network ports 18 specified in the authentication challenge as indicated in figure 3. Advantageously, she may then notify the FC-SDN-C 10, for example by clicking an appropriate link in a web interface on the tablet 17, that the instructions of the authentication challenge have been carried out.
28.In response to the notification from the administrator, or in response to a different stimulus such as a result of a change detected by regular, repeated or continuous monitoring of the connected network equipment 1, the FC-SDN-C 10 may detect that the network equipment 1 has been configured (eg patched) according to the authentication challenges. The validation of the implemented pattern may be carried out using one or more of the following methods, or any other suitable method:
   - The FC-SDN-C 10 evaluates connectivity of the interconnected ports of the network equipment 1 by injecting traffic on to one or more appropriate interface(s) and observing on which interface(s) a response is detected, and/or whether the detected response matches a predetermined expected response;
   - The FC-SDN-C 10 creates packet traffic on a second device which should, according to the authentication challenge, be connected to the network equipment 1, and evaluates on which ports 18, if any, the traffic arrives at or emanates the network equipment 1;
   - The FC-SDN-C 10 determines the sequence and/or timing of the ports 18 becoming active; and/or
   - The FC-SDN-C 10 determines which network addresses / services are reachable from the network equipment 1, and compares these against one or more predetermined expected network addresses / services.
29.The LANaaS system 2 is informed by the FC-SDN-C 10 whether or not the instructions specified in the authentication challenge have been correctly (or within a predetermined tolerance) implemented in the network equipment 1 and includes, where appropriate, any relevant meta information as described above. The LANaaS management system 2 informs the FC-SDN-C 10 of the network contact point information at which the network equipment 1 can join the appropriate managed network, and the FC-SDN-C 10 forwards this contact information to the network equipment 1. If no network equipment was uniquely identified during the above steps, the authentication process may then be repeated (return to step 24), and this "retrying" status may be indicated to the administrator on the web interface, for example. A "Burn-Out" constraint may also be added in such a system; after each unsuccessful authentication, a waiting period may be included as a precaution against denial-of-service or brute force attacks.
30. The FC-SDN-C 10 associates the network equipment 1 with the particular LANaaS 2 which is responsible for managing the particular customer's managed network, and updates the customer's view of the managed network so that the newly-authenticated network equipment 1 is included in the managed network's topology.

It should be understood that patched connections 19 described above are just one possible way of manually configuring the network equipment 1 such that the authentication controller (FC-SDN-C) 10 can verify its identity. Other possibilities include, for example, connecting one or more of the connection ports 18 of the network equipment 1 to another local device (not shown) at the same location, which is also remotely verifiable (or already verified) by the authentication controller 10, or connecting one or more of the the connection ports 18 of the network equipment 1 to the internet (eg via a device with an already-verified IP address). While the examples given here describe the use of physical (wired) connections, it is possible to use local wireless connections, or a combination of wired and local wireless connections. A local wireless connection may comprise Bluetooth™, for example, or wireless LAN, or near-field communication, electromagnetic or a line-of-sight optical communication link. Other manual configuration actions are also possible, depending on what manually-configurable features are available in the particular network equipment 1. If the network equipment 1 comprises manually-operable switches or jumpers, for example, then these may be used to compose the manual configuration "code" which is used by the authentication controller (FC-SDN-C) 10 to determine the identity of the network equipment 1. The particular manually-configurable features of the network equipment 1 may be taken into account by the authentication controller (FC-SDN-C) 10 when generating the challenge information, so that the challenge information includes manual configuration changes of one or more of the particular manually-configurable features available at the network equipment 1.

## Claims

1. Method of onboarding network equipment (1) to a managed network (2), the method comprising, at an authentication controller (10) of the managed network:
receiving an onboarding request (22) of the network equipment (1);
generating an authentication challenge (26) comprising an instruction for making a configuration change to the network configuration of the network equipment (1);
wherein the configuration change to the network configuration of the network equipment (1) is detectable (28) by the authentication controller (10) to identify to the authentication controller (10) the network equipment (1) and/or a network location (6) of the network equipment (1);
communicating to a user the instruction for making the configuration change to the network equipment (1); and
determining (28) whether or not the configuration change has been made to the network equipment (1) from which the onboarding request was received and, if the configuration change has been made to the said network equipment (1) according to the instruction, determining (29) an authenticated status of the network equipment (1) for accessing the managed network (2).

2. Method according to claim 1, wherein said step of determining (29) an authenticated status of the network equipment (1) is performed in response to the configuration change to the network equipment (1).

3. Method according to claim 1 or claim 2, wherein the managed network (2) is one of a plurality of managed networks (2, 2') and wherein the method comprises:
determining, in dependence on the identification of the network equipment (1) and/or the network location (6) of the network equipment (1), to which of the plurality of managed networks (2, 2') to onboard the network equipment (1).

4. Authentication controller (10) for onboarding network equipment (1) to a managed network (2), the authentication controller (10) being **characterised by**:
means for receiving an onboarding request (22) of the network equipment (1);
means (10) for generating an authentication challenge (26) comprising an instruction for making a configuration change to the network configuration of the network equipment (1), wherein the configuration change to the network configuration of the network equipment (1) is detectable (28) by the authentication controller (10) to identify to the authentication controller (10) the network equipment (1) and/or a network location (6) of the network equipment (1) ;
means for communicating to a user the instruction for making the configuration change to the network equipment (1);
means (10) for determining (28) whether or not the configuration change has been made to the network equipment (1) from which the onboarding request was received, and, if the configuration change has been made to the said network equipment (1), determining (29) an authenticated status of the network equipment (1) for accessing the managed network (2).

5. System comprising one or more managed networks (2, 2) and an authentication controller (10) for authenticating network equipment (1) to the one or more managed networks (2, 2'), wherein the authentication controller (10) is an authentication controller (10) according to claim 4.

6. Method according to one of claims 1 to 3, an authentication controller (10) according to claim 4, or a system according to claim 5, in which the configuration change comprises configuring one or more connections (19) to and/or between one or more connection ports (18) of the network equipment (1).

7. Method, authentication controller (10) or system according to claim 6, in which the one or more connections (19) comprise a local connection to a network device local to the network equipment (1) but other than the network equipment (1).

8. Method, authentication controller (10) or system according to claim 7, in which the local connection comprises a wired connection (19) or a local wireless connection.

9. Method, authentication controller (10) or system according to claim 8, in
which the local wireless connection comprises Bluetooth, wireless LAN, near field communication, or an optical or electromagnetic communication link.

10. Method according to one of claims 1 to 3 or 6 to 9, authentication controller (10) according to one of claims 4 or 6 to 9, or system according to one of claims 5 or 6 to 9, in which the network equipment communicates with the authentication controller via a first network, and the authentication challenge (26) is communicated via a second network, other than the first network.

11. Method, authentication controller (10) or system according to claim 10, in which the determining (28) of the configuration change is via the first network.

12. Method, authentication controller (10) or system according to claim 11, in which the second network comprises the internet or a mobile phone network.

13. Method according to one of claims 1 to 3 or 6 to 12, authentication controller (10) according te one of claims 4 or 6 to 12, or system according to one of claims 5 or 6 to 12, in which said determining of the configuration change comprises:
transmission, by the authentication controller (10), of one or more test signals to the network equipment (1), and
reception of one or more test response signals from the network equipment (1)

14. Method according to one of claims 1 to 3 or 6 to 13, authentication controller (10) according to one of claims 4 or 6 to 13, or system according to one of claims 5 or 6 to 13, in which
the configuration change comprises a sequence of at least a first and a second configuration change of the network equipment (1).

15. Method, authentication controller (10) or system according to claim 14, in which the sequence comprises a timed interval between the first and second configuration changes of the network equipment (1).

## Patentansprüche

1. Verfahren zum Onboarding einer Netzwerkausrüstung (1) in ein verwaltetes Netzwerk (2), wobei das Verfahren umfasst, an einem Authentifizierungscontroller (10) des verwalteten Netzwerks:
Empfangen einer Onboarding-Anforderung (22) der Netzwerkausrüstung (1),
Erzeugen einer Authentifizierungs-Aufforderung (26), welche eine Anweisung zu einer Konfigurationsänderung der Netzwerkkonfiguration der Netzwerkausrüstung (1) aufweist;
wobei die Konfigurationsänderung zu der Netzwerkkonfiguration der Netzwerkausrüstung (1) durch den Authentifizierungscontroller (10) ermittelbar (28) ist, um die Netzwerkausrüstung (1) und/oder einen Netzwerkstandort (6) der Netzwerkausrüstung (1) dem Authentifizierungscontroller (10) zu identifizieren;
Kommunizierien der Anweisung zur Durchführung der Konfigurationsänderung der Netzwerkausrüstung an einen Benützer; und
Ermitteln (28) ob die Konfigurationsänderung der Netzwerkausrüstung (1), von welcher die Onboarding-Anforderung empfangen wurde, durchgeführt wurde oder nicht, und, falls die Konfigurationsänderung der Netzwerkausrüstung (1) gemäss der Anweisung durchgeführt wurde, Feststellen (29) eines authentifiziert-Status der Netzwerkausrüstung (1) zum Zugang zum verwalteten Netzwerk (2).

2. Verfahren gemäss Anspruch 1, wobei das Feststellen des authentifiziert-Status der Netzwerkausrüstung in Reaktion auf die Konfigurationsänderung der Netzwerkausrüstung (1) erfolgt.

3. Verfahren gemäss Anspruch 1 oder Anspruch 2, wobei das verwaltete Netzwerk (2) eines von mehreren verwalteten Netzwerken (2, 2') ist und wobei das Verfahren umfasst:
Bestimmen, in Abhängigkeit von der Identifizierung der Netzwerkausrüstung (1) und/oder von dem Netzwerkstandort (6) der Netzwerkausrüstung (1), an welches der mehreren verwalteten Netzwerke (2, 2') das Onboarding der Netzwerkausrüstung (1) erfolgen soll.

4. Authentifizierunscontroller (10) zum Onboarding einer Netzwerkausrüstung (1) in ein verwaltetes Netzwerk (2), wobei der Authentifizierungscontroller (10) **gekennzeichnet ist durch**:
Mittel zum Empfangen einer Onboarding-Anforderung (22) der Netzwerkausrüstung (1),
Mittel zum Erzeugen einer Authentifizierungs-Aufforderung (26), welche eine Anweisung zu einer Konfigurationsänderung der Netzwerkkonfiguration der Netzwerkausrüstung (1) aufweist, wobei die Konfigurationsänderung zu der Netzwerkkonfiguration der Netzwerkausrüstung (1) **durch** den Authentifizierungscontroller (10) ermittelbar (28) ist, um die Netzwerkausrüstung (1) und/oder einen Netzwerkstandort (6) der Netzwerkausrüstung (1) dem Authentifizierungscontroller (10) zu identifizieren;
Mittel zum Kommunizierien an einen Benützer die Anweisung zur Durchführung der Konfigurationsänderung der Netzwerkausrüstung; und
Mittel (10) zum Ermitteln (28) ob die Konfigurationsänderung der Netzwerkausrüstung (1), von welcher die Onboarding-Anforderung empfangen wurde, durchgeführt wurde oder nicht, und, falls die Konfigurationsänderung der Netzwerkausrüstung (1) gemäss der Anweisung durchgeführt wurde, Feststellen (29) eines authentifiziert-Status der Netzwerkausrüstung (1) zum Zugang zum verwalteten Netzwerk (2).

5. System, das ein oder mehrere verwaltete Netzwerke (2, 2') und einen Authentifizierungscontroller (10) zum Authentifizieren von Netzwerkausrüstungen (1) in das eine verwaltete Netzwerk bzs. in die mehreren verwalteten Netzwerke (2, 2') aufweist, wobei der Authentifizierungscontroller (10) ein Authentifizierungscontroller (10) gemäss Anspruch 4 ist.

6. Verfahren gemäss einem der Ansprüche 1 bis 3, ein Authentifizierungscontroller (10) gemäss Anspruch 4 oder ein System gemäss Anspruch 5, in welchem die Konfigurationsänderung das Konfigurieren einer oder mehrerer Verbindungen (19) zu und/oder zwischen einem oder mehreren Anschlussports (18) der Netzwerkausrüstung (1) aufweist.

7. Verfahren, Authentifizierungscontroller (10) oder System gemäss Anspruch 6, wobei die eine oder mehreren Verbindungen (19) eine lokale Verbindung zu einem Netzwerkgerät umfassen, das lokal zur Netzwerkausrüstung (1), jedoch nicht die Netzwerkausrüstung (1) ist.

8. Verfahren, Authentifizierungscontroller (10) oder System gemäss Anspruch 7, wobei die lokale Verbindung eine Drahtverbindung (19) oder eine lokale drahtlose Verbindung aufweist.

9. Verfahren, Authentifizierungscontroller (10) oder System gemäss Anspruch 8, wobei die lokale drahtlose Verbindung Bluetooth⁽™⁾, WLAN, Nahfeldkommunikation oder eine optische oder elektromagnetische Kommunikationsverbindung aufweist.

10. Verfahren gemäss einem der Ansprüche 1 bis 3 oder 6 bis 9, Authentifizierungscontroller (10) gemäss einem der Ansprüche 4 oder 6 bis 9, oder System gemäss einem der Ansprüche 5 oder 6 bis 9, wobei die Netzwerkausrüstung mit dem Authentifizierungscontroller über ein erstes Netzwerk kommuniziert und die Authentifizierungs-Aufforderung (26) über ein zweites Netzwerk, das nicht erste Network ist, kommuniziert wird.

11. Verfahren, Authentifizierungscontroller (10) oder System gemäss Anspruch 10, wobei das Ermitteln (28) der Konfigurationsänderung über das erste Netzwerk erfolgt.

12. Verfahren, Authentifizierungscontroller (10) oder System gemäss Anspruch 11, wobei das zweite Netzwerk das Internet oder ein Mobilfunknetz aufweist.

13. Verfahren gemäss einem der Ansprüche 1 bis 3 oder 6 bis 12, Authentifizierungscontroller (10) gemäss einem der Ansprüche 4 oder 6 bis 12, oder System gemäss einem der Ansprüche 5 oder 6 bis 12, wobei das Ermitteln der Konfigurationsänderung umfasst:
Übertragung, durch den Authentifizierungscontroller (10), eines oder mehrerer Testsignale an die Netzwerkausrüstung (1), und
Empfang eines oder mehrerer Testantwortsignale von der Netzwerkausrüstung (1).

14. Verfahren gemäss einem der Ansprüche 1 bis 3 oder 6 bis 13, Authentifizierungscontroller (10) gemäss einem der Ansprüche 4 oder 6 bis 13, oder System gemäss einem der Ansprüche 5 oder 6 bis 13, wobei
die Konfigurationsänderung eine Folge von mindestens einer ersten und einer zweiten Konfigurationsänderung der Netzwerkausrüstung (1) aufweist.

15. Verfahren, Authentifizierungscontroller (10) oder System gemäss Anspruch 14, wobei die Folge ein bestimmtes Zeitintervall zwischen den ersten und zweiten Konfigurationsänderungen der Netzwerkausrüstung (1) aufweist.

## Revendications

1. Procédé d'intégration d'un équipement de réseau (1) à un réseau géré (2), le procédé comprenant, au niveau d'un contrôleur d'authentification (10) du réseau géré:
réception d'une demande d'intégration (22) de l'équipement de réseau (1),
génération d'un défi d'authentification (26) comprenant une instruction d'un changement de configuration à apporter à l'équipement réseau (1), dans lequel le changement de configuration à l'équipement réseau (1) est détectable (28) par le contrôleur d'authentification (10) afin d'identifier au contrôleur d'authentification (10) l'équipement réseau (1) et/ou un emplacement réseau (6) de l'équipement réseau (1);
communication vers un utilisateur l'instruction du changement à apporter à l'équipement réseau (1); et
détermination (28) si le changement de configuration a été effectué ou pas à l'équipement réseau (1) depuis lequel la demande d'intégration a été reçu, et, si le changement de configuration a été apporté à l'équipement réseau (1) selon l'instruction, déterminer une condition d'authentifié de l'équipement réseau (1) pour accéder au réseau géré (2).

2. Procédé selon la revendication 1, dans lequel l'étape de détermination (29) la condition de l'équipement réseau (1) est effectué en réponse au changement de configuration de l'équipement réseau (1).

3. Procédé selon la revendication 1 ou la revendication 2, dans lequel le réseau géré (2) est l'un d'une pluralité de réseaux gérés (2, 2') et dans lequel le procédé comprend:
la détermination, en fonction de l'identification de l'équipement de réseau (1) et/ou de l'emplacement réseau (6) de l'équipement réseau (1), auquel de la pluralité de réseaux gérés (2, 2') l'équipement réseau (1) est à intégrer.

4. Contrôleur d'authentification (10) pour l'intégration d'un équipement de réseau (1) à un réseau géré (2), le contrôleur d'authentification (10) étant **caractérisé par**:
moyens de réception d'une demande d'intégration (22) de l'équipement de réseau (1),
moyens de génération d'un défi d'authentification (26) comprenant une instruction d'un changement de configuration à apporter à l'équipement réseau (1), dans lequel le changement de configuration à l'équipement réseau (1) est détectable (28) par le contrôleur d'authentification (10) afin d'identifier au contrôleur d'authentification (10) l'équipement réseau (1) et/ou un emplacement réseau (6) de l'équipement réseau (1);
moyens de communication vers un utilisateur l'instruction du changement à apporter à l'équipement réseau (1); et
moyens de détermination (28) si le changement de configuration a été effectué ou pas à l'équipement réseau (1) depuis lequel la demande d'intégration a été reçu, et, si le changement de configuration a été apporté à l'équipement réseau (1) selon l'instruction, déterminer une condition d'authentifié de l'équipement réseau (1) pour accéder au réseau géré (2).

5. Système comprenant un ou plusieurs réseaux gérés (2, 2') et un contrôleur d'authentification (10) pour authentifier un équipement réseau (1) sur le ou les réseaux gérés (2, 2'), dans lequel le contrôleur d'authentification (10) est un contrôleur d'authentification (10) selon la revendication 4.

6. Procédé selon l'une des revendications 1 à 3, contrôleur d'authentification (10) selon la revendication 4, ou système selon la revendication 5, dans lequel le changement de configuration comprend la configuration d'une ou plusieurs connexions (19) vers et/ou entre une ou plusieurs ports de connexion (18) de l'équipement réseau (1).

7. Procédé, contrôleur d'authentification (10) ou système selon la revendication 6, dans lequel la ou les connexions (19) comprennent une connexion locale à un dispositif réseau local à l'équipement réseau (1) mais autre que l'équipement réseau (1).

8. Procédé, contrôleur d'authentification (10) ou système selon la revendication 7, dans lequel la connexion locale comprend une connexion filaire (19) ou une connexion sans fil locale.

9. Procédé, contrôleur d'authentification (10) ou système selon la revendication 8, dans lequel la connexion sans fil locale comprend Bluetooth⁽™⁾, un wifi, une communication en champ proche ou une liaison de communication optique ou électromagnétique.

10. Procédé selon l'une des revendications 1 à 3 ou 6 à 9, contrôleur d'authentification (10) selon l'une des revendications 4 ou 6 à 9 ou système selon l'une des revendications 5 ou 6 à 9, dans lequel l'équipement réseau communique avec le contrôleur d'authentification via un premier réseau, et le défi d'authentification (26) est communiquée via un deuxième réseau, autre que le premier réseau.

11. Procédé, contrôleur d'authentification (10) ou système selon la revendication 10, dans lequel la détermination (28) du changement de configuration se fait via le premier réseau.

12. Procédé, contrôleur d'authentification (10) ou système selon la revendication 11, dans lequel le deuxième réseau comprend Internet ou un réseau de téléphonie mobile.

13. Procédé selon l'une des revendications 1 à 3 ou 6 à 12, contrôleur d'authentification (10) selon l'une des revendications 4 ou 6 à 12 ou système selon l'une des revendications 5 ou 6 à 12, dans lequel ladite détermination du changement de configuration comprend:
la transmission, par le contrôleur d'authentification (10), d'un ou plusieurs signaux de test à l'équipement de réseau (1), et
réception d'un ou plusieurs signaux de réponse de test en provenance de l'équipement réseau (1).

14. Procédé selon l'une des revendications 1 à 3 ou 6 à 13, contrôleur d'authentification (10) selon l'une des revendications 4 ou 6 à 13 ou système selon l'une des revendications 5 ou 6 à 13, dans lequel le changement de configuration comprend une séquence d'au moins un premier et un second changement de configuration de l'équipement réseau (1).

15. Procédé, contrôleur d'authentification (10) ou système selon la revendication 14, dans lequel la séquence comprend un intervalle temporel mesuré entre les première et seconde modifications de configuration de l'équipement réseau (1).
